Europäisches Patentamt

European Patent Office

Office européen des brevets

(19)

(11) Veröffentlichungsnummer: **0 590 391 B1**

(12) **EUROPÄISCHE PATENTSCHRIFT**

(45) Veröffentlichungstag der Patentschrift: **15.11.95**

(51) Int. Cl.6: **C09J 5/00**

(21) Anmeldenummer: **93114619.5**

(22) Anmeldetag: **11.09.93**

(54) **Wiederablösbarer, selbstklebender Haken.**

(30) Priorität: **30.09.92 DE 4232709**
**08.10.92 DE 4233872**

(43) Veröffentlichungstag der Anmeldung:
**06.04.94 Patentblatt 94/14**

(45) Bekanntmachung des Hinweises auf die
Patenterteilung:
**15.11.95 Patentblatt 95/46**

(84) Benannte Vertragsstaaten:
**AT BE CH DE ES FR GB IT LI NL PT**

(56) Entgegenhaltungen:
**EP-A- 0 456 472**
**DE-A- 2 642 121**
**DE-A- 3 331 016**
**DE-C- 3 714 453**
**US-A- 4 599 263**

(73) Patentinhaber: **Beiersdorf Aktiengesellschaft**
**Unnastrasse 48**
**D-20245 Hamburg (DE)**

(72) Erfinder: **Lühmann, Bernd, Dr.**
**Heidbergstrasse 55**
**D-22846 Norderstedt (DE)**

**Beschreibung**

Die Erfindung betrifft einen wiederablösbaren, selbstklebenden Haken oder eine ähnliche Befestigungsvorrichtung.

Selbstklebende Haken sind wohlbekannt. Hingegen sind wiederablösbare solche Haken, die auch dauerhaft und stark haften, nicht bekannt. Das Entfernen von angeklebten Haken, etwa von Fliesen im Badezimmer oder in der Küche, ist aber ein Vorhaben, bei dem der Untergrund leicht beschädigt werden kann.

Aus der DE-OS 33 31 016 sind Klebfolien für wiederlösbare Klebbindungen bekannt, die es gestatten, daß eine damit hergestellte Klebbindung durch Ziehen an der Klebfolie in Richtung der Verklebungsebene lösbar ist. Mit solchen Klebfolien lassen sich hohe Klebkräfte und Scherfestigkeiten erzielen und Klebverbunde ohne weitere Hilfsmittel wieder lösen, vergleichbar dem Öffnen eines Reißverschlusses oder besser noch vergleichbar dem Öffnen eines Weckglases: Die Gummidichtung wird am Anfasser aus der Dichtungsfuge gezogen.

In der Praxis haben sich jedoch beträchtliche Nachteile bei der Verwendung solcher Klebfolien gezeigt. Zum einen handelt es sich um ein erklärungsbedürftiges Produkt. Derjenige, der bisher noch nicht eine solche Klebfolie verwendet hat, ist leicht geneigt, die Fügeteile so aufeinander zu kleben, daß die Klebfolie zwischen den Fügeteilen verschwindet, nicht mehr herausragt, und also kann man nicht mehr daran ziehen: eine irreversible Verklebung ist die Folge mit entsprechender Enttäuschung. Die Enttäuschung ist aber ebenso groß, wenn bei richtiger Anwendung dann beim Ziehen an der Klebfolie diese abreißt: auch hier ist eine irreversible Verklebung die Folge. Der Vorteil einer wiederlösbaren Klebbindung, die ohne Beschädigung der Fügeteile in einfachster Weise eben durch Ziehen erfolgen kann, wandelt sich in einen drastischen Nachteil, denn gerade die Fügeteile, die wieder getrennt werden sollten, sind nun dauerhaft verklebt. Es bleibt meist nur, die Fügeteile zu zerstören.

Das Problem eines Abrisses beim Ziehen hatten auch die Erfinder der DE-OS 33 31 016 erkannt und diesem ihre besondere Aufmerksamkeit gewidmet. Auf Seite 4, Mitte, wird demgemäß ein bestimmtes Verhältnis von Abzugskraft zu Reißlast, die Reißlast soll stets größer als die Abzugskraft sein und aus Sicherheitsgründen soll sich die Abzugskraft zur Reißlast wie 1:2 bis 1:3 verhalten.

In der Praxis hat sich jedoch gezeigt, daß diese Vorsichtsmaßnahme oft nicht genügt. Eine Verklebung von Substraten auf einem Ausstellungsfreigelände, die nach Ende der Aussstellung wieder getrennt werden soll, ist aufgrund von Abrissen nicht mehr zu trennen. Ebenso etwa auf ein Fenster geklebte Kalender oder Advents-Dekorationen. Auch Poster oder Bilder, so an der Wand befestigt, werden zu irreversiblem Wandschmuck, sobald die Klebfolie beim Ziehen abgerissen ist. Der Schaden ist erheblich, der Kunde verloren. Und auch die Verwendung noch dickerer Klebfolien, wie DE-OS 33 31 016 dies empfihelt, hilft nicht, solche Abrisse zu verhindern.

Auch aus der DE-PS 37 14 453 ist die Verwendung einer solchen Klebfolie bekannt, dort als Stripband bezeichnet, um Übungssprengkörper zerstörungsfrei von Übungsobjekten wieder abnehmen zu können. Man läßt auch hier eine Lasche 6 seitlich aus der Klebfuge hervorstehen, um an dieser zu ziehen und den Verbund so wieder zu lösen. Auch bei dieser Anwendung kommt es in der Praxis zu Abrissen.

Aufgabe der Erfindung war es, einen Haken oder dergleichen Befestigungsvorrichtung zu schaffen, der einerseits einfach, fest und dauerhaft angeklebt werden kann, der andererseits aber einfach, zuverlässig und ohne Beschädigung des Verklebungs-Untergrundes wieder abgelöst werden kann, ohne daß es beim trennenden Ziehen zu Abrissen kommt.

Gelöst wird diese Aufgabe durch einen Haken oder dergleichen wie er in den Ansprüchen näher gekennzeichnet ist.

Die Verwendung einer UV-undurchlässigen Abdeckung an einem Ende des Streifens vermeidet erfolgreich das Auftreten von Abrissen, wenn denn an dem Streifen zum Zwecke des Trennens gezogen wird. Ob dies dadurch geschieht, daß die Ausbildung kleinster, nicht sichtbarer Schädigungen der Klebfolie durch UV-Licht unterbunden wird, von denen ausgehend ein Riss beim Ziehen entstehen und sich fortpflanzen kann, sei dahingestellt. Das Ergebnis jedenfalls ist überzeugend: es gibt keine Reißer mehr. Und aus dem Stand der Technik herleitbar war dies auch nicht, da doch gerade gemäß DE-OS 33 31 016 dieses Problem in einer anderen Richtung angegangen war, nämlich im dicker machen der Klebfolie. Und gemäß DE-PS 37 14 453 war gar kein Ansatz zur Lösung des Problems erkennbar.

Ein weiterer Vorteil der erfindungsgemäßen Verwendung einer UV-undurchlässigen Abdeckung an einem Ende des Streifens liegt darin, daß diese Abdeckung zugleich als Anfasser zum Ziehen dient. Denn damit ist eine gleichmäßigere Kraftübertragung über die gesamte Klebfolienbreite möglich und Spannungsspitzen werden reduziert, die Reißneigung insbe. auf rauhen Untergründen vermindert. Damit wird also das Vermeiden von Rissen beim Ziehen zusätzlich unterstützt.

2

Vorteilhaft ist zudem, daß im Bereich des Anfassers die Klebfolie nicht eine mit der Zeit überaus hohe Verklebungsfestigkeit erreichen kann. Gerade bei längeren Verklebungen kann dieses starke Aufziehen problematisch werden. Einerseits läßt sich eine solche Klebfolie nur schwer von z.B. der Wand ablösen, andererseits kommt es bei Dehnungsbeanspruchung, wie sie beim Ziehen in Richtung der Verklebungsebene auftritt, insb. bei partiellen Verklebungen auf rauhen Untergründen, z.B. Rauhfasertapeten, leicht zum Einreißen der Klebfolie ausgehend vom Kantenbereich und von der Klebfolienoberfläche. Erfindungsgemäß treten alle diese Probleme nicht auf.

Ein erfindungsgemäßer Haken wird bevorzugt so angeklebt, daß der Stift des Hakens sich im oberen Bereich befindet, während der Anfasser nach unten gerichtet ist. Zieht man dann an diesem Anfasser nach unten, so löst sich der Haken rückstandsfrei von seinem Untergrund, selbst von einer Wand mit Rauhfastertapete. Dies geschieht ähnlich dem Öffnen eines Reißverschlusses, besser noch ähnlich dem Öffnen eines Weckglases.

Die eingesetzten Materialien für die Klebfolie können vorteilhaft solche sein, wie sie in der DE-OS 33 31 016 beschrieben sind, ebenso deren Verarbeitung. Dies Verhältnis von Abzugskraft zu Reißlast der erfindungsgemäß verwendeten Klebfolie ist dabei größer als 1:1,5, insb. aber 1:2 oder größer. Die hohe Elastizität (Dehnfähigkeit) bei gleichzeitig hoher Reißfestigkeit korreliert in aller Regel auch mit einer geringen Plastizität.

Als Elastomere eignen sich insb. solche von hoher Reißfestigkeit und hohem Dehnvermögen.

Bevorzugt eingesetzt werden können Blockcopolymere mit Blöcken bestehend aus Poly(vinylaromaten) und Blöcken bestehend aus Poly(1,3-Dienen) respektive deren Hydrierungsprodukte. Die Polyvinylaromatenblöcke verleihen den Materialien die kohäsiven Eigenschaften und steuern damit wesentlich ihre Reißfestigkeit. Die Polydienblöcke bzw. die aus ihnen durch Hydrierung gewonnenen Folgeprodukte verleihen den Materialien ihre elastischen Eigenschaften. Als Polvvinylaromat wird vornehmlich Polystyrol eingesetzt, als Elastomerblöcke finden bevorzugt Poly(butadien) und Poly(isopren) sowie deren Hydrierungsprodukte Poly(Ethylen/Butylen) und Poly(Ethylen/Propylen) Verwendung.

Geeignet sind primär Dreiblockcopolymere mit Polystyrolendblöcken, nachfolgend als S abgekürzt, und einem Elastomermittelblock, nachfolgend als D abgekürzt, (SDS-Dreiblockcopolymere). Diese können SD-Zweiblockcpolymer enthalten. Geeignet sind prinzipiell auch lineare $(SD)_n$-, radiale und sternförmige $(SD)_nX$-Multiblockcopolymere, oder auch Gemische mehrer der zuvor genannten Blockcopolymere.

Als Klebrigmacher können die üblichen Klebharze wie z.B. Kohlenwasserstoffharze, Polyterpenharze und Terpenphenolharze sowie Kolophonium und Kolophoniumderivate eingesetzt werden. Die Rezeptierung erfolgt nach den allgemeinen Regeln.

Als weitere Abmischkomponenten können die Klebmassen u.a. enthalten:
- Weichmacheröle.
- Alterungsschutzmittel z.B. in Form von Antioxidantien und UV-Stabilisatoren.
- Füllstoffe. Rezepturbestandteil können sowohl anorganische als auch organische Füllstoffe, insbesondere auch Pigmente sein.
- Vernetzer.

Geeignete Haftklebemassen können aus Lösung, aus Dispersion, bevorzugt jedoch als Schmelzhaftkleber verarbeitet werden.

Im folgenden Beispiel soll die Erfindung näher beschrieben werden, ohne sie damit unnötig einschränken zu wollen. Alle Teile sind Gewichtsteile.

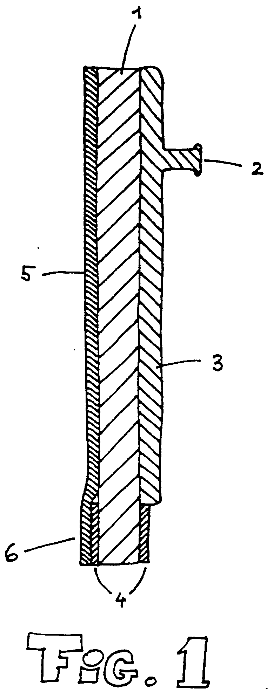

Fig. 1 zeigt im schematischen Querschnitt einen Klebestreifen 1, welcher im unteren Bereich mit einer Abdeckung 4 als Anfasser versehen ist. Vorderseitig ist auf den Klebestreifen oberhalb Abdeckung 4 eine Bodenplatte 3 aufgebracht, welche in ihrem oberen Bereich eine stiftförmige Erweiterung 2 trägt. Die Rückseite des Klebestreifens ist vollfächig mit einem Trennpapier oder einer Trennfolie 5 abgedeckt, von der am unteren Ende ein Teil als Anfasser 6 dient.

**Herstellung der Klebfolie**

**Beispiel 1**

51,5 Teile Lineares SIS-Dreiblockcopolymer mit einem Blockpolystyrolgehalt von 29 Gew.-% und einer Härte gemessen nach Shore A von 60. (Vector 4211)

47.0 Teile teilhydriertes aromatisches C-9 Kohlenwasserstoffharz mit einem Ring & Ball Erweichungspunkt von 100°C mit einem MMAP-Wert von 58°C und einem DACP-Wert von 16°C. (Regalite S 260).

1.0 Teile phenolisches Antioxidans (Irganox 1010).

0,5 Teile Lichtschutzmittel (polymeres sterisch gehindertes Amin)

EP 0 590 391 B1

werden in einem Sigma-blade Mischer bei +160°C bis zur Homogenität geknetet. Die so erhaltene Schmelzhaftklebermasse wird bei +160°C in einer Strichstärke von 410 µm über eine Breitschlitzdüse auf eine beidseitig silikonisierte 80 µm starke Trennfolie aus monoaxial verstrecktem Polypropylen beschichtet.

```
    - Klebmassedicke                       410    µm
    - Reißkraft*                             3,9 N/mm²
    - Reißdehnung*                        1100    %
    - Klebkraft**                        ca. 7    N/cm
    - Scherstandzeit***               > 20000    min


  *    Verstreckungsgeschwindigkeit: 300 mm/min; Muster-
       länge: 100 mm



  **   Stahl, Abzugswinkel: 90°, Abzugsgeschwindigkeit:
       300 mm/min, Klebeband auf 25 µm PETP-Folie lami-
       niert
  ***  Stahl, Verklebungsfläche: 13 x 20 mm², Temperatur
       = RT, 20N Scherbelastung.
```

**Beispiel 2**

25,5 Teile lineares SBS-Dreiblockpolymer mit einem Blockpolvstvrolgehalt von 29 Gew.-% und einer Härte gemessen nach Shore A von 65. (Vector 4261)
26,0 Teile lineares SIS-Dreiblockpolymer mit einem Blockpolystyrolgehalt von 29 Gew.-% und einer Härte gemessen nach Shore A von 60. (Vector 4211)
47,0 Teile Pentaerythrithester von hydriertem Kolophonium mit einem Ring & Ball Erweichungspunkt von 101°C und einer Säurezahl von 12. (Pentalyn H-E)
1,0 Teile phenolisches Antioxidans (Irganox 1010)
0,5 Teile Lichtschutzmittel (polymeres sterisch gehindertes Amin)
werden wie unter Beispiel 1 verarbeitet und in einer Strichstärke von 400 µm auf die unter Beispiel 1 beschriebene Trennfolie ausgestrichen.

| | |
|---|---|
| - Klebmassedicke | 400 µm |
| - Klebkraft** | ca. 15,0 N/cm |
| - Scherstandzeit*** | > 10000 min |
| **, *** siehe unter Beispiel 1 | |

**Beispiel 3**

51.5 Teile Lineares SIS-Dreiblockpolymer mit einem Blockpolystyrolgehalt von 29 Gew.-% und einer Härte gemessen nach Shore A von 60 (Vector 4211)
47.0 Teile Pentaerythrithester von hydriertem Kolophonium mit einem Ring & Ball Erweichungspunkt von 101°C und einer Säurezahl von 12. (Pentalyn H-E)

4

1,0 Teile phenolisches Antioxidans (Irganox 1010)

0,5 Teile Lichtschutzmittel (polymeres sterisch gehindertes Amin)

werden wie unter Beispiel 1 verarbeitet und in einer Strichstärke von 600 $\mu$m auf die unter Beispiel 1 beschriebene Trennfolie ausgestrichen.

| | |
|---|---|
| - Klebmassedicke | 600 $\mu$m |
| - Klebkraft** | ca. 25 N/cm |
| - Scherstandseit*** | > 10000 min |
| - Reißdehnung* | 1100 % |
| - Reißkraft* | 4,1 N/mm$^2$ |
| *, **, *** siehe unter Beispiel 1 | |

**Beispiel 4**

40,0 Teile Lineares SEBS-Dreiblockpolymer mit 40 Gew.-% SEB-Zweiblockcopolymer, einem Blockpolystyrolgehalt von 13 Gew.-% und einer Härte gemessen nach Shore A von 65. (Kraton G 1657)

50.0 Teile Pentaerythrithester von hydriertem Kolophonium mit einem Ring & Ball Erweichungspunkt von 101°C und einer Säurezahl von 14. (Foral 105-E)

10 Teile eines aliphatischen Öles (V 7047, Shell)

1,0 Teile phenolisches Antioxidans

0,5 Teile Lichtschutzmittel (polymeres sterisch gehindertes Amin)

werden wie unter Beispiel 1 verarbeitet und in einer Strichstärke von 500 $\mu$m auf die unter Beispiel 1 beschriebene Trennfolie ausgestrichen.

SEBS-basierende Haftklebemassen eignen sich insbesondere, wenn hohe Anforderungen an die Alterungsbeständigkeit gestellt werden.

**Herstellung der Haken**

Ballenware aus den Beispielen 1 - 4 (bestehend aus doppelseitigem Haftklebeband mit einseitiger Trennfolien- oder Trennpapierabdeckung) wird an einer Anlage bestehend aus 2 Kaschierstationen, einer Dekaschierstation, einer weiteren Kaschierstation, einer Längsschneideeinrichtung und einer Vereinzelungsanlage (Stanze) zu Blattware (Strips) verarbeitet, auf die eine der Figur 1 entsprechende Bodenplatte mit integriertem Stift aufgebracht wird.

Hierzu wird auf die trennfolienfreie Seite (Vorderseite) von 120 mm breiter Ballenware an der 1. Kaschierstation mittig eine 20 mm breite und 15 $\mu$m starke, pigmentierte Polyethylenterephthalatfolie kaschiert. An der 2. Kaschierstation wird silikonisierte Polvethylentrennfolie in 125 mm Breite derart zukaschiert, daß die Trennfolie beidseitig ca. 2,5 mm über die Klebemasse übersteht. Nachdem die Trennfolienabdeckung der Rückseite an einer Dekaschierstation ausgedeckt ist, wird 20 mm breite Polyethylenterephthalatfolie mittig auf die Rückseite kaschiert. Die Vereinzelung zu Blattware von 62.6 mm Länge und 19 mm Breite wird mittels Aufschneiden (in Längsrichtung) und durch Stanzen an einer Formatstanze erreicht. Auf die so hergestellten Stanzlinge wird ein Kunststoffhaken entsprechend Abb. 1 bestehend aus einer Bodenplatte mit integriertem Stift aufgebracht.

Alternativ können als Ausgangsmaterial Strips genommen werden welche beidseitig mit Anfasser und Trennfolie versehen sind. Vor Applikation des Hakens bestehend aus Bodenplatte und integriertem Stift ist entsprechend eine Trennfolie zu entfernen und der Klebebandstreifen rückseitig auf die Bodenplatte aufzukleben.

**Patentansprüche**

**1.** Wiederablösbarer, selbstklebender Haken oder dergleichen Befestigungsvorrichtung, gekennzeichnet durch einen Streifen (1) einer Klebfolie für eine wiederlösbare Verklebung auf Basis von thermoplastischem Kautschuk und klebrigmachenden Harzen, wobei die Klebfolie hohe Elastizität und geringe Plastizität aufweist und wobei die Adhäsion geringer als die Kohäsion ist, das Haftvermögen beim Dehnen der Folie weitgehend verschwindet, das Verhältnis von Abzugskraft zu Reißlast mindestens 1:1,5 ist, und wobei eine damit hergestellte Klebbindung durch Ziehen an der Klebfolie in Richtung der Verklebungsebene lösbar ist, wobei das eine Ende des Streifens (1) beidseitig mit einer Abdeckung (4) versehen ist, die zugleich als Anfasser zum Ziehen dient, wobei mindestens die auf der Vorderseite angeordnete Abdeckung (4) UV-undurchlässig ist, und wobei die Vorderseite des Streifens (1) außer im Bereich der Abdeckung (4) eine Bodenplatte (3) mit einer nach vorn weisenden stiftförmigen Erweiterung (2) trägt, und die Rückseite des Streifens (1) mit einem Trennpapier oder einer Trennfolie (5) abgedeckt ist, die im Bereich der Abdeckung (4) einen Anfasser (6) aufweist.

2. Haken nach Anspruch 1, dadurch gekennzeichnet, daß Bodenplatte (3) und ihre Erweiterung (2) aus Kunststoff oder Metall bestehen.

3. Haken nach Anspruch 1, dadurch gekennzeichnet, daß der Streifen (1) aus einer Klebfolie besteht, die Antioxidantien, UV-Stabilisatoren, Farbstoffe, Füllstoffe und/oder andere übliche Hilfsmittel enthält.

4. Haken nach Anspruch 1, dadurch gekennzeichnet, daß der Streifen (1) aus einer Klebfolie mit einer Dicke von 0,2 mm bis 1,2 mm besteht.

5. Haken nach Anspruch 1, dadurch gekennzeichnet, daß der Streifen (1) aus einer Klebfolie besteht, bei der sich die Abzugskraft zur Reißlast wie 1:1,5 bis 1:5 verhalten.

6. Haken nach Anspruch 1, dadurch gekennzeichnet, daß der Streifen (1) aus einer Klebfolie besteht, deren Rohstoff-Mischung heiß geknetet und extrudiert ist.

7. Haken nach Anspruch 1, dadurch gekennzeichnet, daß der durch die Abdeckung (4) gebildete Anfasser 8 - 25 mm lang ist, bei einer Breite des Hakens von 10 - 40 mm, insbesondere 18 - 20 mm.

8. Haken nach Anspruch 1, dadurch gekennzeichnet, daß die Abdeckung (4) aus einer lackierten oder pigmentierten aufkaschierten Kunststoffolie besteht und insbesondere farbig von der Bodenplatte (3) abgesetzt ist.

**Claims**

1. Redetachable, self-adhesive hook or similar fixing device, characterized by a strip (1) of an adhesive film for reseparable bonding based on a thermoplastic rubber and tackifying resins, wherein the adhesive film has high elasticity and low plasticity and wherein the adhesion is lower than the cohesion, the adhesive power largely disappears on extension of the film, the ratio of the peel strength to the tear load is at least 1:1.5, and wherein an adhesive bond produced with this can be separated by pulling on the adhesive film in the direction of the adhesion plane, wherein one end of the strip (1) is provided on both sides with a covering (4), which at the same time serves as a tab for pulling, wherein at least the covering (4) located on the front side is opaque to UV and wherein the front side of the strip (1) carries, except for in the region of the covering (4), a baseplate (3) having a peg-shaped extension (2) pointing forwards, and the reverse of the strip (1) is covered with a release paper or a release film (5) which has a tab (6) in the region of the covering (4).

2. Hook according to Claim 1, characterized in that the baseplate (3) and its extension (2) comprise plastic or metal.

3. Hook according to Claim 1, characterized in that the strip (1) comprises an adhesive film which contains antioxidants, UV stabilizers, dyes, fillers and/or other customary auxiliaries.

4. Hook according to Claim 1, characterized in that the strip (1) comprises an adhesive film having a thickness of 0.2 mm to 1.2 mm.

5. Hook according to Claim 1, characterized in that the strip (1) comprises an adhesive film in which the peel strength to the tear load is 1:1.5 to 1:5.

6. Hook according to Claim 1, characterized in that the strip (1) comprises an adhesive film, the raw material mixture of which is hot kneaded and extruded.

**7.** Hook according to Claim 1, characterized in that the tab 8 formed by the covering (4) is 25 mm long, with a hook width of 10-40 mm, in particular 18-20 mm.

**8.** Hook according to Claim 1, characterized in that the covering (4) comprises a lacquered or pigmented laminated plastic film and in particular is distinguished from the baseplate (3) by its colour.

**Revendications**

**1.** Crochet ou dispositif de fixation similaire autoadhésif détachable à nouveau, caractérisé par un ruban (1) d'une pellicule adhésive pour un collage détachable à nouveau à base d'un caoutchouc thermoplastique et de résines à pouvoir adhésif, la pellicule adhésive présentant une élasticité élevée et une faible plasticité et l'adhésion étant inférieure à la cohésion, la capacité d'adhésion lors de l'élongation de la pellicule disparaissant en majeure partie, le rapport de la force d'arrachement à la charge de rupture étant d'au moins 1:1,5 et une liaison adhésive réalisée ainsi étant détachable par tirage sur la pellicule adhésive dans la direction du plan de collage, l'une des extrémités du ruban (1) étant pourvue des deux côtés d'une couverture (4), oui sert simultanément de prise de tirage, au moins la couverture (4) disposée sur le côté recto étant opaque aux rayons ultraviolets, et le côté recto du ruban (1) portant, à l'exception du domaine de la couverture (4), une plaque de base (3) ayant un élargissement (2) tourné vers l'avant en forme de pointe, et le côté verso du ruban (1) étant recouvert d'un papier de séparation ou d'une pellicule de séparation (5), oui présente dans le domaine de la couverture (4) une prise de tirage (6).

**2.** Crochet selon la revendication 1, caractérisé en ce que la plaque de base (3) et son élargissement (2) se composent de plastique ou de métal.

**3.** Crochet selon la revendication 1, caractérisé en ce que le ruban (1) se compose d'une pellicule adhésive, oui contient des agents antioxydants, des agents de stabilisation vis-à-vis des rayons ultraviolets, des colorants, des charges et/ou d'autres additifs usuels.

**4.** Crochet selon la revendication 1, caractérisé en ce que le ruban (1) se compose d'une pellicule adhésive ayant une épaisseur de 0,2 mm à 1,2 mm.

**5.** Crochet selon la revendication 1, caractérisé en ce que le ruban (1) se compose d'une pellicule adhésive, pour laquelle la force d'arrachement se comporte par rapport à la charge de rupture comme le rapport 1:1,5 à 1:5.

**6.** Crochet selon la revendication 1, caractérisé en ce que le ruban (1) se compose d'une pellicule adhésive, dont le mélange de matières premières est pétri à chaud et soumis à extrusion.

**7.** Crochet selon la revendication 1, caractérisé en ce que la prise de tirage formée par la couvertures (4) est longue de 8 - 25 mm, pour une largeur du crochet de 10 - 40 mm, en particulier de 18 - 20 mm.

**8.** Crochet selon la revendication 1, caractérisé en ce que la couverture (4) se compose d'une pellicule de matière synthétique laquée ou pigmentée, appliquée par laminage, et délimitée de la plaque de base (3) en particulier par l'intermédiaire d'une couleur.

EP 0 590 391 B1

FIG. 1